# FASCICULE DE BREVET EUROPEEN

(11) **EP 1 191 870 B1**
(45) Date de publication et mention de la délivrance du brevet: **08.11.2006**
(21) Numéro de dépôt: 00951604.8
(22) Date de dépôt: 16.06.2000
(51) Int. Cl.: A47J 43/06

(54) **BATTEUR-MIXEUR ELECTRIQUE A MAIN COMPORTANT UN DISPOSITIF DE SECURITE**
ELEKTRISCHES HANDRÜHR- UND -MIXGERÄT MIT SICHERHEITSEINRICHTUNG
ELECTRIC HAND-OPERATED ROTARY BEATER/MIXER COMPRISING A SAFETY DEVICE

(30) Priorité: 17.06.1999 FR 9907808
(43) Date de publication de la demande: 03.04.2002
(73) Titulaire: SEB S.A., 69130 Ecully (FR)
(72) Inventeur: BEAUDET, Jean-Yves, F-61400 Haleine (FR); MARRIERE, Marc, F-53300 Ambrieres Les Vallees (FR)
(74) Mandataire: Kiehl, Hubert
(86) Numéro de dépôt international: PCT/FR2000/001682
(87) Numéro de publication internationale: WO 2000/078195

(56) Documents cités:
- US-A- 3 619 754
- US-A- 5 871 278
- US-A- 5 875 706

## Description

La présente invention concerne un batteur-mixeur électrique à main, notamment un batteur -mixeur ménager, destiné à entraîner au moins un accessoire dit de battage tel que, par exemple, un fouet, ou un accessoire dit de mixage tournant à vitesse élevée tel que, par exemple, un pied mixeur, et comportant un corps contenant un moteur d'entraînement électrique, deux dispositifs rotatifs d'accouplement qui sont reliés à l'arbre du moteur et qui sont destinés à recevoir, via respectivement deux passages d'engagement débouchant du corps, l'accessoire de battage et, respectivement, l'accessoire de mixage, et un dispositif de sécurité propre à interdire la mise en place simultanée des deux accessoires, respectivement de battage et de mixage, ledit dispositif de sécurité comprenant une pièce mécanique déplaçable propre à entraver le passage d'engagement de l'accessoire de mixage.

On entend par accessoire de battage un outil de travail du type fouet ou malaxeur, et par accessoire de mixage un accessoire à outil de travail tournant à vitesse élevée du type pied mixeur à hélice rotative, ou encore du type bol mixeur à couteau rotatif.

Avec un tel appareil ménager, on sait que la présence d'un dispositif de sécurité interdisant la mise en place concomitante des deux accessoires, respectivement de battage et de mixage, est particulièrement utile pour protéger l'utilisateur de tout risque de blessure qui serait dû aux deux outils de travail en mouvement simultané si l'appareil était mis en marche avec les deux accessoires en place.

Dans un appareil ménager connu de ce genre, tel que décrit dans le document US- A- 5 871 278, le dispositif de sécurité qui interdit la mise en place simultanée des deux accessoires, respectivement de battage et de mixage, comporte une tringle montée coulissante horizontalement dans le corps de l'appareil, dont l'une des extrémités est conformée en une patte d'accrochage agencée dans le passage d'engagement de l'accessoire de mixage, et dont l'autre extrémité est conformée en une fourche à plusieurs dents, laquelle fourche est associée à un organe d'éjection déplaçable verticalement entre une position basse et une position haute sous l'action de l'accessoire de battage. La fourche de la tringle est adaptée à rendre libre le déplacement de l'organe d'éjection de manière à permettre la mise en place de l'accessoire de battage, la patte d'accrochage de la tringle obstruant le passage d'engagement de l'accessoire de mixage ; par suite du dégagement de la patte d'accrochage de la tringle sous l'action de l'accessoire de mixage lors de sa mise en place, la fourche de la tringle est apte à bloquer, par l'une de ses dents, l'organe d'éjection en position basse, interdisant ainsi la mise en place de l'accessoire de battage. Un tel dispositif de sécurité est cependant complexe et est d'une mise en oeuvre relativement compliquée en étant assujettie au bon fonctionnement de l'organe d'éjection monté dans l'appareil.

L'invention a notamment pour but de remédier à ces inconvénients et de réaliser un batteur-mixeur électrique à main, du type exposé ci-dessus, dans lequel le dispositif de sécurité soit simple, économique, fiable et parfaitement adapté à une fabrication en grande série.

Selon l'invention, la pièce mécanique est également propre à entraver le passage d'engagement de l'accessoire de battage, d'une manière sélective par rapport au passage d'engagement de l'accessoire de mixage.

Ainsi, grâce à cette pièce d'entrave sélective agissant directement sur les deux passages d'engagement, respectivement de l'accessoire de battage et de l'accessoire de mixage, on comprend que la mise en oeuvre de la pièce est désormais rendue indépendante de tout organe mobile appartenant à l'appareil, ce qui permet de simplifier le dispositif de sécurité en le rendant particulièrement fiable.

Les caractéristiques et avantages de l'invention ressortiront d'ailleurs de la description qui va suivre, à titre d'exemple non limitatif, en référence aux dessins annexés dans lesquels :
- la figure 1 est une vue partielle en coupe verticale d'un batteur-mixeur selon l'invention, en position arrêt et en l'absence d'accessoire ;
- la figure 2 est une vue en perspective, à échelle agrandie, d'un dispositif de sécurité équipant le batteur-mixeur de la figure 1 ;
- la figure 3 est une vue identique à la figure 1, avec montage d'un accessoire de battage ; et
- la figure 4 est une vue identique à la figure 1, avec montage d'un accessoire de mixage.

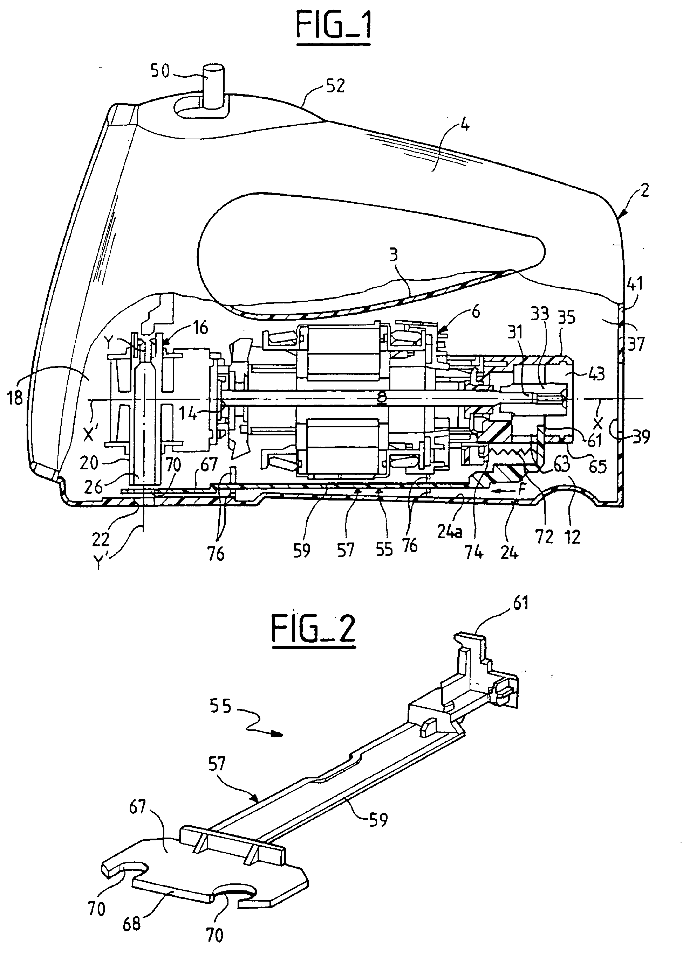

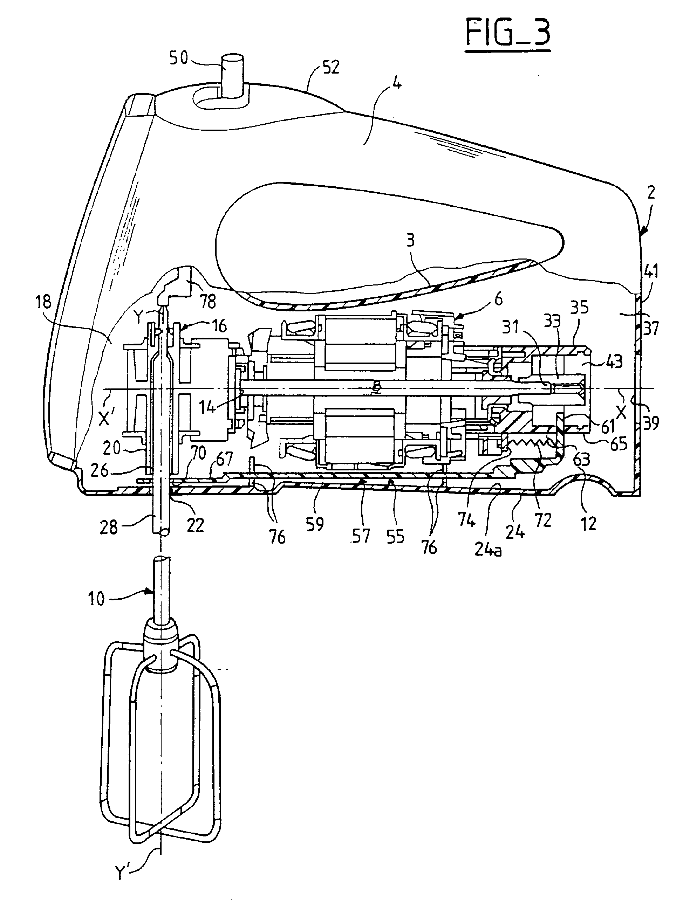

Le batteur-mixeur à main représenté à la figure 1 comprend un corps 2 de forme générale sensiblement prismatique présentant une partie évidée 3 qui délimite une poignée 4, et contenant un moteur d'entraînement électrique 6 muni d'un arbre 8 d'axe XX' et logé, en utilisation normale avec au moins un accessoire dit de battage tel que, par exemple, un fouet 10 comme montré à la figure 3, dans la partie inférieure 12 du corps 2 en s'étendant horizontalement.

Dans l'exemple de réalisation illustré à la figure 1, l'arbre 8 du moteur d'entraînement 6 porte à son extrémité antérieure 14 une vis sans fin (non représentée) qui coopère avec deux pignons hélicoïdaux tournant chacun autour d'un axe YY' perpendiculaire à l'axe XX', et qui forme avec ceux-ci un réducteur 16. Ces deux pignons hélicoïdaux sont situés dans la partie avant 18 du corps 2 et sont liés respectivement à deux dispositifs rotatifs d'accouplement 20 d'axe YY', dont un seul est visible à la figure 1, qui sont respectivement ouverts en regard de deux ouvertures 22 pratiquées dans la paroi inférieure 24 du corps de manière à définir deux passages 26 débouchant du corps et destinés à l'engagement de deux fouets 10 dont un seul est montré à la figure 3. Chaque fouet 10 comprend une tige cylindrique 28 (figure 3), d'axe YY', dont l'extrémité supérieure est destinée à venir se fixer dans le dispositif d'accouplement correspondant 20. Les deux fouets 10 peuvent être fixés dans les dispositifs d'accouplement 20 soit côte à côte, soit l'un derrière l'autre.

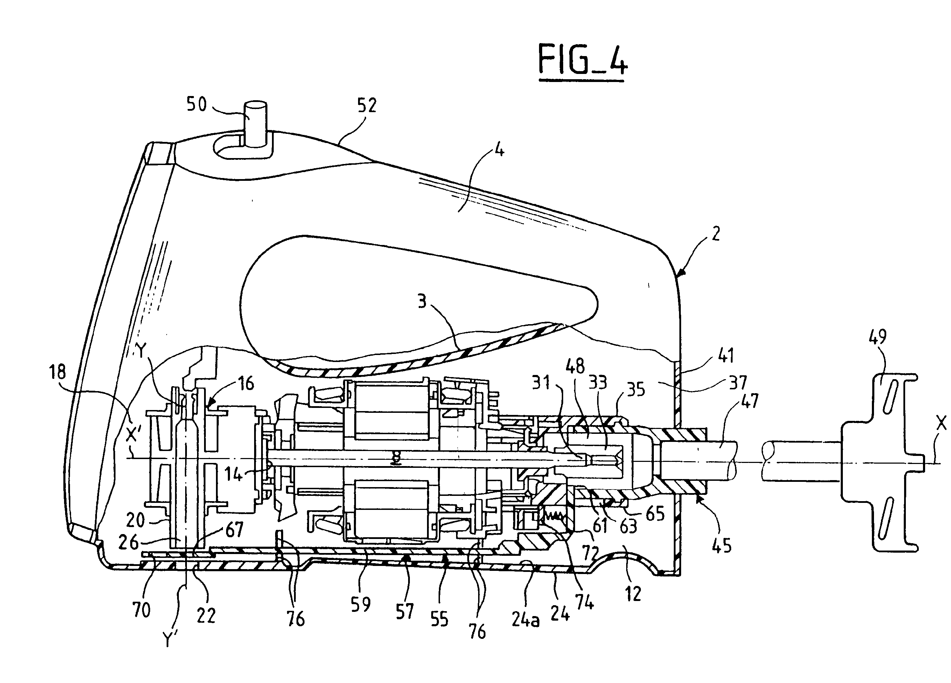

Dans cet exemple, figure 1, l'arbre 8 du moteur d'entraînement 6 porte à son extrémité postérieure 31 un autre dispositif rotatif d'accouplement 33 formant un entraîneur qui est logé dans un fût cylindrique 35 s'étendant horizontalement dans la partie arrière 37 du corps 2. Dans cet exemple de réalisation, le fût 35 est ouvert en regard d'une ouverture 39 pratiquée dans la paroi postérieure 41 du corps 2 de manière à définir un passage 43 débouchant du corps et destiné à l'engagement d'un accessoire de mixage tournant à vitesse élevée tel que, par exemple, un pied mixeur 45 comme montré à la figure 4. Ce pied mixeur 45, figure 4, est destiné à venir se fixer, par exemple par vissage, dans le fût 35 et renferme un arbre 47 dont l'extrémité dite antérieure 48, opposée à la cloche 49 logeant une hélice non représentée, est adaptée à venir s'accoupler avec l'entraîneur 33.

Sur les figures 1, 3 et 4, on a désigné en 50 une manette montée dans la paroi supérieure 52 du corps 2 et destinée, d'une manière connue en soi, à actionner un commutateur (non représenté) qui met le moteur en et hors service et règle sa vitesse de rotation.

La batteur-mixeur comporte de plus un dispositif de sécurité, désigné par la référence globale 55 sur les figures 1 à 4, propre à interdire la mise en place simultanée des fouets 10 et du pied mixeur 45, et qui, selon l'invention, comprend une pièce mécanique déplaçable 57 propre à entraver sélectivement l'un ou l'autre des passages 26 et 43 d'engagement des fouets 10 et, respectivement, du pied mixeur 45.

Dans un mode d'exécution préféré illustré aux figures 1, 3 et 4, cette pièce mécanique dite de sécurité 57 est montée coulissante horizontalement à l'intérieur du corps 2, à proximité de la face interne 24a de la paroi inférieure 24 du corps, et comprend une tringle horizontale 59 dont la partie postérieure porte un doigt ou ergot 61, mieux visible à la figure 2, engagé en saillie à l'intérieur du fût 35 à travers une lumière de débattement 63 ménagée dans la paroi latérale 65 du fût 35. Comme le montre la figure 2, dans cet exemple, la partie antérieure de la tringle 59 est conformée en une plaquette horizontale 67 formant un cache dont le bord antérieur 68 est creusé de deux échancrures identiques 70 associées respectivement aux deux passages 26 d'engagement des fouets et ayant chacune un profil adapté à celui de la tige 28 (figure 3) du fouet 10, ainsi qu'une encolure légèrement supérieure au diamètre de la tige 28 du fouet.

La pièce de sécurité 57, figures 1, 3 et 4, est sollicitée par un ressort de rappel 72, en l'occurrence un ressort de compression, qui est interposé entre la partie inférieure du doigt 61 de la tringle 59 et une aile verticale 74 ménagée sur la face externe de la paroi latérale 65 du fût 35, à proximité du fond de celui-ci.

On a représenté en 76 sur les figures 1, 3 et 4 des nervures formées dans le corps 2 et entretoisant, avec un léger jeu, la tringle 59 de la pièce de sécurité 57 ; ces nervures 76 assurent le guidage de la pièce 57 lors de son coulissement.

Dans la position d'arrêt du batteur-mixeur, en l'absence de tout accessoire, comme illustré à la figure 1, la pièce de sécurité 57 occupe une position de repos dans laquelle les deux échancrures 70 de son cache 67 sont alignées avec les deux ouvertures 22, rendant ainsi libres les deux passages 26 d'engagement des fouets, tandis que son doigt en saillie 61 coopère en appui avec la paroi latérale 65 du fût 35, sous l'action du ressort de compression 72.

En référence à la figure 3, la pièce de sécurité 57 occupe une position dite de battage qui correspond à sa position de repos de la figure 1 dans laquelle les deux passages 26 sont rendus libres et autorisent donc la mise en place des fouets 10, tandis que le passage 43 est obstrué par le doigt 61 en saillie dans le fût 35. Les tiges 28 des fouets 10 traversent ainsi chacune leur ouverture respective 22, avec un léger jeu périphérique, puis l'échancrure correspondante 70 du cache 67 de la pièce de sécurité 57, également avec un léger jeu périphérique, pour venir se fixer dans le dispositif d'accouplement correspondant 20.

Dans cette position de battage illustrée à la figure 3, si l'utilisateur introduit le pied mixeur 45 par l'ouverture 39, le pied mixeur 45 ne peut quasiment pas déplacer le doigt 61, au jeu périphérique près existant entre la tige 28 de chaque fouet 10 et l'échancrure correspondante 70 du cache 67 de la pièce de sécurité 57, de sorte que le pied mixeur 45 ne peut pas être mis complètement en place dans le fût 35 ; on comprend qu'un infime déplacement du doigt 61 provoque aussitôt la mise en butée du fond de chaque échancrure 70 du cache 67 contre la tige correspondante 28 du fouet 10, interdisant la mise en place complète du pied mixeur 45 et donc son accouplement avec l'entraîneur 33.

A partir de la position de battage de la figure 3, les fouets 10 peuvent être libérés, d'une manière connue en soi, par un organe d'éjection, repéré en 78 sur cette figure 3, qui est susceptible d'être actionné par la manette 50.

En référence à la figure 4, la pièce de sécurité 57 occupe une position dite de mixage en laquelle elle est amenée par coulissement suivant le sens de la flèche F de la figure 1, sous l'action de la mise en place par vissage du pied mixeur 45, provoquant alors le déplacement longitudinal du doigt 61 de la pièce 57 à l'intérieur du fût 35, à l'encontre du ressort de compression 72. En fin de course de vissage du pied mixeur 45, comme montré à la figure 4, l'arbre 47 de celui-ci est accouplé avec l'entraîneur 33, et le cache 67 de la pièce de sécurité 57 obture les deux ouvertures 22, interdisant dès lors la mise en place des fouets 10.

A partir de la position de mixage de la figure 4, le pied mixeur 45 peut être simplement retiré par dévissage, la pièce de sécurité 57 revenant alors, sous l'action du ressort de compression 72, dans sa position de repos telle que montrée à la figure 1.

Comme il ressort de la description ci-dessus, la pièce de sécurité 57 constitue une pièce mécanique simple faisant office d'entrave sélective qui agit directement sur les passages 26 et 43 d'engagement des fouets 10 et, respectivement, du pied mixeur 45, et ce en toute indépendance à l'égard d'un quelconque organe mobile monté dans l'appareil.

## Revendications

1. Batteur-mixeur électrique à main destiné à entraîner au moins un accessoire dit de battage (10) tel que, par exemple, un fouet, ou un accessoire dit de mixage (45) tournant à vitesse élevée tel que, par exemple, un pied mixeur, comportant un corps (2) contenant un moteur d'entraînement électrique (6), deux dispositifs rotatifs d'accouplement (20, 33) qui sont reliés à l'arbre (8) du moteur (6) et qui sont destinés à recevoir, via respectivement deux passages d'engagement (26, 43) débouchant du corps (2), l'accessoire de battage (10) et, respectivement, l'accessoire de mixage (45) et un dispositif de sécurité (55) propre à interdire la mise en place simultanée des deux accessoires, respectivement de battage (10) et de mixage (45), ledit dispositif de sécurité (55) comprenant une pièce mécanique déplaçable (57) propre à entraver le passage (43) d'engagement de l'accessoire de mixage (45),
**caractérisé en ce que** la pièce mécanique (57) est également propre à entraver le passage (26) d'engagement de l'accessoire de battage (10), en agissant directement sur le passage (26) et d'une manière sélective par rapport au passage (43) d'engagement de l'accessoire de mixage (45).

2. Batteur-mixeur selon la revendication 1,
**caractérisé en ce que** la pièce mécanique (57) comprend une partie formant cache (67) associée au passage (26) d'engagement de l'accessoire de battage (10), et une partie formant doigt (61) associée au passage (43) d'engagement de l'accessoire de mixage (45), cette pièce (57) étant mobile entre une position dite de battage dans laquelle sa partie formant cache (67) découvre le débouché (22) du passage (26) d'engagement de l'accessoire de battage (10) de manière à autoriser la mise en place de cet accessoire de battage, tandis que sa partie formant doigt (61) fait saillie dans le passage (43) d'engagement de l'accessoire de mixage (45) de façon à interdire la mise en place de l'accessoire de mixage, et une position dite de mixage dans laquelle sa partie formant doigt (61) est dégagée de manière à autoriser la mise en place de l'accessoire de mixage, tandis que sa partie formant cache (67) obture le débouché (22) du passage (26) d'engagement de l'accessoire de battage (10) de façon à interdire la mise en place de l'accessoire de battage.

3. Batteur-mixeur selon la revendication 2, dans lequel le passage (26) d'engagement de l'accessoire de battage (10) débouche dans la paroi inférieure (24) du corps (2), tandis que le passage (43) d'engagement de l'accessoire de mixage (45) débouche dans la paroi postérieure (41) du corps (2), le dispositif d'accouplement (33) de l'accessoire de mixage (45) est logé dans un fût cylindrique (35) s'étendant horizontalement et définissant le passage d'engagement de l'accessoire de mixage, et l'accessoire de battage (10) comporte une tige (28) dont une extrémité est destinée à venir s'accoupler avec le dispositif d'accouplement associé (20),
**caractérisé en ce que** la pièce mécanique (57) est montée coulissante horizontalement dans le corps (2), à proximité de la face interne (24a) de la paroi inférieure (24) du corps (2), **en ce que** la partie formant doigt (61) de la pièce (57) est engagée à l'intérieur du fût (35) à travers une lumière de débattement (63) ménagée dans la paroi latérale (65) dudit fût (35) et se dégage par suite de la mise en place de l'accessoire de mixage (45), et **en ce que** la partie formant cache (67) de la pièce (57) comprend au moins une échancrure (70) qui est située en regard du débouché (22) du passage (26) d'engagement de l'accessoire de battage (10) lorsque la pièce (57) est en position de battage, et qui est adaptée, dans cette position de battage, à laisser passer avec un léger jeu périphérique la tige (28) de l'accessoire de battage (10).

4. Batteur-mixeur selon la revendication 3,
**caractérisé en ce que** des moyens de guidage (76) sont disposés dans le corps (2) pour guider la pièce mécanique (57) lors de son coulissement.

5. Batteur-mixeur selon l'une des revendications 2 à 4,
**caractérisé en ce que** la pièce mécanique (57) est sollicitée par des moyens de rappel élastique (72) qui tendent à la rappeler en position de battage.

## Claims

1. Hand-held electric beater-mixer which is designed to drive at least one so-called beating accessory (10) such as, for example, a whisk, or a so-called mixing accessory (45) which rotates at high speed, such as, for example, a mixer foot, comprising a body (2) which contains an electric drive motor (6), two rotary connection devices (20, 33) which are connected to the shaft (8) of the motor (6) and are designed to receive, via two respective engagement passages (26, 43) which open into the body (2), respectively the beating accessory (10) and the mixing accessory (45) and a safety device (55) which can prevent simultaneous putting into place of the two accessories respectively for beating (10) and mixing (45), said safety device (55) comprising a displaceable mechanical part (57) which can impede the passage (43) for engagement of the mixing accessory (45), **characterised in that** the mechanical part (57) can also impede the passage (26) for engagement of the beating accessory (10) by acting directly on the passage (26) and selectively relative to the passage (43) for engagement of the mixing accessory (45).

2. Beater-mixer according to claim 1, **characterised in that** the mechanical part (57) comprises a part forming a guard (67) which is associated with the passage (26) for engagement of the beating accessory (10), and a part forming a finger (61) which is associated with the passage (43) for engagement of the mixing accessory (45), this part (57) being mobile between a so-called beating position in which its part forming a guard (67) uncovers the opening (22) in the passage(26) for engagement of the beating accessory (10), such as to allow this beating accessory to be put into place, whereas its part forming a finger (61) projects into the passage (43) for engagement of the mixing accessory (45), such as to prevent the mixing accessory from being put into place, and a so-called mixing position in which its part forming a finger (61) is released such as to allow the mixing accessory to be put into place, whereas its part forming a guard (67) closes the opening (22) in the passage (26) for engagement of the beating accessory (10), such as to prevent the beating accessory from being put into place.

3. Beater-mixer according to claim 2, wherein the passage(26) for engagement of the beating accessory (10) opens into the lower wall (24) of the body (2), whereas the passage (43) for engagement of the mixing accessory (45) opens into the rear wall (41) of the body,(2), the device (33) for connection of the mixing accessory (45) is accommodated in a cylindrical shaft (35) which extends horizontally and forms the passage for engagement of the mixing accessory, and the beating accessory (10) comprises a rod (28), one end of which is designed to be connected with the associated connection device (20), **characterised in that** the mechanical part (57) is fitted such as to slide horizontally in the body (2) in the vicinity of the inner surface (24a) of the lower wall (24) of the body (2), **in that** the part forming a finger (61) of the part (57) is engaged inside the shaft (35) via a clearance aperture (63) provided in the lateral wall (65) of the said shaft (35) and is released as a result of putting into place of the mixing accessory (45), and **in that** the part forming a guard (67) of the part (57) comprises at least one cut-out (70) which is situated opposite the opening (22) in the passage (26) for engagement of the beating accessory (10) when the part (57) is in the beating position, and which is designed, in this beating position, to allow the rod (28) of the beating accessory (10) to pass with slight peripheral play.

4. Beater-mixer according to claim 3, **characterised in that** guide means (76) are disposed in the body (2) in order to guide the mechanical part (57) during its sliding.

5. Beater-mixer according to any one of claims 2 to 4, **characterised in that** the mechanical part (57) is thrust by resilient return means (72) which tend to return it to the beating position.

## Patentansprüche

1. Elektrisches Handrühr- und -mixgerät für den Antrieb von mindestens einem sogenannten Rühransatz (10), wie beispielsweise einem Quirl, oder einem sogenannten Mixansatz (45), der mit hoher Geschwindigkeit dreht, wie beispielsweise einem Mixfuß, mit einem Körper (2), der folgende Bauteile enthält: einen elektrischen Antriebsmotor (6), zwei drehbare Kupplungsvorrichtungen (20, 33), die mit der Welle (8) des Motors (6) verbunden und dazu bestimmt sind, über jeweils zwei Eintrittsöffnungen (26, 43), die vom Körper (2) her nach außen münden, jeweils den Rühransatz (10) und den Mixansatz (45) aufzunehmen, und eine Sicherheitseinrichtung (55), die geeignet ist, das gleichzeitige Einsetzen der zwei Ansätze, nämlich des Rühransatzes (10) und Mixansatzes (45) zu verhindern, wobei die Sicherheitseinrichtung (55) ein mechanisches verschiebbares Teil (57) aufweist, das die Eintrittsöffnung (43) des Mixansatzes (45) blockieren kann,
**dadurch gekennzeichnet, daß** das mechanische Teil (57) auch geeignet ist, die Eintrittsöffnung (26) für den Rühransatz (10) zu blockieren, indem es direkt auf die Eintrittsöffnung (26) wirkt und zwar selektiv mit Bezug auf die Eintrittsöffnung (43) für den Mixansatz (45).

2. Rühr- und -mixgerät nach Anspruch 1,
**dadurch gekennzeichnet, daß** das mechanische Teil (57) einen Teil aufweist, der eine Abdeckung (67) bildet, die mit der Eintrittsöffnung (26) für den Einsatz des Rühransatzes (10) zusammenwirkt, und einen einen Finger (61) bildenden Teil aufweist, der mit der Eintrittsöffnung (43) für den Einsatz des Mixansatzes (45) zusammenwirkt, wobei dieses Teil (57) beweglich ist zwischen einer sogenannten Rührstellung, in der sein die Abdeckung (67) bildender Teil die Durchlaßöffnung (22) der Eintrittsöffnung (26) für den Rühransatz (10) freigibt und so das Einsetzen dieses Rühransatzes ermöglicht, während sein einen Finger (61) bildender Teil in die Eintrittsöffnung (43) für den Mixansatz (45) vorspringt, so daß er das Einsetzen des Mixansatzes verhindert, und einer sogenannten Mixstellung, in der sein den Finger (61) bildender Teil freigegeben ist, so daß das Einsetzen des Mixansatzes möglich ist, während sein die Abdeckung (67) bildender Teil die Durchlaßöffnung (22) gegenüber der Eintrittsöffnung (26) für das Eingreifen des Rühransatzes (10) abdeckt und so das Einsetzen des Rühransatzes verhindert.

3. Rühr- und -mixgerät nach Anspruch 2, bei dem die Eintrittsöffnung (26) für den Rühransatz (10) in der unteren Wand (24) des Körpers (2) mündet, während der Eintrittsöffnung (43) für das Einsetzen des Mixansatzes (45) in der hinteren Wand (41) des Körpers (2) mündet, wobei die Kupplungsvorrichtung (33) des Mixansatzes (45) in einer zylindrischen Hülse (35) angeordnet ist, die sich horizontal erstreckt und die Eintrittsöffnung des Mixansatzes definiert, und der Rühransatz (10) eine Stange (28) aufweist, von der ein Ende zum Kuppeln mit der zugehörigen Kupplungsvorrichtung (20) dient,
**dadurch gekennzeichnet, daß** das mechanische Teil (57) im Körper (2) in der Nähe der Innenseite (24a) der unteren Wand (24) des Körpers (2) horizontal verschiebbar montiert ist, daß der den Finger (61) bildende Teil des Teils (57) in das Innere der Hülse (35) durch einen in der Seitenwand (65) der Hülse (35) ausgebildeten Schlitz (63) eingreift und infolge des Einsetzens des Mixansatzes (45) freikommt und daß der die Abdeckung (67) bildende Teil des Teils (57) mindestens eine Ausnehmung (70) aufweist, die gegenüber der Durchlaßöffnung (22) der Eintrittsöffnung (26) des Rühransatzes (10) liegt, wenn das Teil (57) in der Rührstellung ist, und die dafür eingerichtet ist, daß sie in dieser Rührstellung die Stange (28) des Rühransatzes (10) mit einem geringen Spiel hindurchtreten läßt.

4. Rühr- und -mixgerät nach Anspruch 3,
**dadurch gekennzeichnet, daß** im Körper (2) Führungsmittel (76) vorgesehen sind, um das mechanische Teil (57) bei seiner Verschiebung zu führen.

5. Rühr- und -mixgerät nach einem der Ansprüche 2 bis 4,
**dadurch gekennzeichnet, daß** das mechanische Teil (57) durch elastische Rückstellmittel (72) beaufschlagt ist, welche bestrebt sind, es in die Rührstellung zurückzuholen.
